(19) **Europäisches Patentamt**
**European Patent Office**
**Office européen des brevets**

(11) **EP 4 117 156 A1**

(12) **EUROPEAN PATENT APPLICATION**

(43) Date of publication:
**11.01.2023 Bulletin 2023/02**

(21) Application number: **22183412.0**

(22) Date of filing: **06.07.2022**

(51) International Patent Classification (IPC):
**H02M 1/32** (2007.01)  **H02M 7/5387** (2007.01)

(52) Cooperative Patent Classification (CPC):
**H02M 7/5387; H02M 1/327**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **08.07.2021 DE 102021207232**

(71) Applicant: **Valeo eAutomotive Germany GmbH 91056 Erlangen (DE)**

(72) Inventors:
• **Kotb, Ramy**
  **c/o VSEA Erlangen (DE)**
• **Hekal, Ahmed**
  **c/o VSEA, Erlangen (DE)**

(74) Representative: **Valeo Powertrain Systems Service Propriété Intellectuelle Immeuble le Delta 14, avenue des Béguines 95892 Cergy Pontoise (FR)**

(54) **INVERTER AND ESTIMATION OF AN INTERNAL TEMPERATURE OF A SEMICONDUCTOR SWITCH**

(57)    The invention relates to an inverter (110) comprising: a power module ($116_{1-3}$) having at least one semiconductor switch (Q, Q'), and a control device (120) configured to control the power module ($116_{1-3}$) and to estimate an internal temperature ($T_J$) of the at least one semiconductor switch (Q, Q') by means of a temperature model (122) being a polynomial of order three or more having, as arguments, operating parameters including: a switching frequency ($F_{SW}$), a temperature ($T_S$) of the power module ($116_{1-3}$), an AC current (I) outputted by the power module ($116_{1-3}$), and the DC voltage (Udc).

FIG. 1

**Description**

The present invention relates to an inverter and to an estimation of an internal temperature of a semiconductor switch of a power module of an inverter. It is especially intended be used in an automotive vehicle.

It is difficult to directly measure the internal temperature of the semiconductor switch (e.g. its junction temperature ) once the inverter is installed in an automotive vehicle. That is why the internal temperature is instead estimated from other measures.

Known techniques to estimate the temperature include using a thermal model of the inverter. The thermal model is based for example on the physical modeling of the inverter losses and the measured thermal impedance of the inverter. The thermal impedance is given to the thermal model as a function of the coolant flow rate. The tolerances of the thermal model function inputs cause big deviation and high inaccuracy, especially when the coolant inlet temperature is being estimated and not measured. This problem causes the system to behave unexpectedly (e.g. an early derating action for the system because of higher estimated power module temperature than the actual temperature or delayed derating, which may cause thermal stress damage).

An object of the invention is to improve the accuracy of the temperature estimation.

The object of the invention may be solved by an inverter comprising:

- a power module having at least one semiconductor switch, and
- a control device configured to control the power module such that, during normal operation of the inverter, the power module converts a DC voltage into an AC voltage by a switching operation of the at least one semiconductor switch, the control device being further configured to estimate an internal temperature of the at least one semiconductor switch by means of a temperature model of the at least one semiconductor switch, the temperature model being for example stored in the control device,

wherein the temperature model is a polynomial of order three or more having, as arguments, operating parameters including:

- a switching frequency of the inverter associated with the switching operation,
- a temperature of the power module, for example an ambient temperature of the at least one semiconductor switch or a temperature of a substrate, such as a direct copper bonding substrate, on which the at least one semiconductor switch is mounted,
- an AC current outputted by the power module in response to the AC voltage, and
- the DC voltage.

Surprisingly, it has been found that a polynomial temperature model may be more accurate than a dedicated thermal model. Advantageously, a polynomial temperature model provides higher accuracy as the terms of the polynomial increase.

Some further optional features of the invention which can be used together or separately are developed below.

The control device may use the estimated temperature for carrying out a derating action, such as a torque derating action or switching frequency derating action.

The control device may use the estimated temperature for estimating losses of the inverter.

The operating parameters may include at least one of, preferably all of:

- a rotational speed of an electric motor intended to be driven by the inverter or a fundamental frequency of the AC voltage,
- a flow rate of a coolant in a cooling device of the inverter for cooling the power module, in particular the at least one semiconductor switch, and
- a coolant temperature of the coolant.

The operating parameters may include at least one of:

- a rotor torque of the electric motor,
- a power factor associated with the electric motor, and
- a modulation index of the inverter associated with the switching operation.

The estimated internal temperature may be a junction temperature of the at least one semiconductor switch. Estimating the junction temperature is important because it is often the most affecting parameter for the lifetime of the power module and the inverter. The power module operation is limited to a certain junction temperature value (Tjunction_max). If the junction temperature exceeded this value, a derating action may need to be activated to protect the inverter.

The power module may comprise at least one switch leg comprising two semiconductor switches each having first and second terminals, the two second terminals being connected to each other at a middle point and the DC voltage being intended to be applied between the two first terminals.

The at least one semiconductor switch may be an IGBT or a MOSFET.

The control device may be configured to estimate the internal temperature of each of several semiconductor switches by means of respective temperature models.

The polynomial temperature model may be of degree 3. Advantageously, it has been found that a polynomial temperature model of degree 3 offers a good compromise with respect to realizing dynamic behavior and polynomial complexity.

The AC voltage may be a multiphase voltage, such as a three phase voltage.

The inverter may further comprise at least one sensor for respectively measuring at least one of the operating parameters, for example a temperature sensor for measuring the temperature of the power module, an AC current sensor for measuring the AC current outputted by the power module, or a DC voltage sensor for measuring the DC voltage.

The temperature model may be trained in advance by machine learning.

The training may comprise:

- obtaining training data by measuring, for example using an infrared camera, the internal temperature of a test inverter, for several combinations of the operating parameters, and
- training the polynomial of the temperature model using the training data, for example using a polynomial regression.

There may be at least ten times more combinations than operating parameters.

The invention also relates to an electric drive comprising an inverter according to the invention, an electric motor driven by the inverter.

The invention also relates to a vehicle comprising drive wheels and an electric drive according to the invention for driving, at least indirectly, at least one of the wheels.

The invention also relates to a method for estimating an internal temperature of at least one semiconductor switch of a power module of an inverter comprising a power module having at least one semiconductor switch, and a control device configured to control the power module such that, during normal operation of the inverter, the power module converts a DC voltage into an AC voltage by a switching operation of the at least one semiconductor switch, the method comprising:

- receiving measured or estimated operating parameters, and
- estimating the internal temperature by means of a temperature model of the at least one semiconductor switch, wherein the temperature module is a polynomial of order three or more having, as arguments, the received operating parameters, wherein the operating parameters include:

  + a switching frequency of the inverter associated with the switching operation,
  + a temperature of the power module, for example an ambient temperature of the at least one semiconductor switch or a temperature of a substrate, such as a direct copper bonding substrate, on which the at least one semiconductor switch is mounted,
  + an AC current outputted by the power module in response to the AC voltage, and
  + the DC voltage.

The present invention will be described more specifically with reference to the following drawings, in which:

- Figure 1 is a schematic view showing a vehicle comprising an example of an inverter according to the invention, comprising power modules and a control device for controlling the power modules,
- Figure 2 is a block diagram illustrating the steps of an example of a method for training a temperature model used by the control device for estimating an internal temperature of a semiconductor switch of the power modules,
- Figure 3 is a block diagram illustrating the steps of an example of a method according to the invention for estimating the internal temperature of the semiconductor switch, and
- Figure 4 is a cross section of one of the power modules.

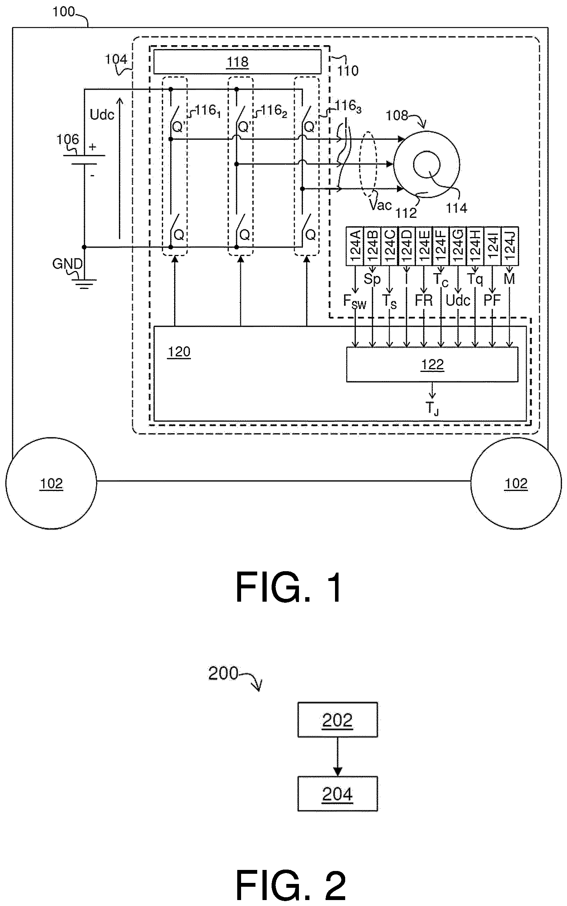

Referring to figure 1, a vehicle 100 in which the invention may be carried out will now be described. In the described example, the vehicle 100 is an automotive vehicle.

The vehicle 100 comprises drive wheels 102 for causing the vehicle to move, and an electric drive 104 configured to drive at least one of the drive wheels 102 at least indirectly. The vehicle 100 further comprises a DC voltage source 106, such as a battery, for electrically powering the electric drive 104. The DC voltage source 106 is configured for providing a DC voltage Udc.

The electric drive 104 comprises an electric motor 108 and an inverter 110 configured to drive the motor 108, for instance by supplying electric power from the DC voltage source 106. The motor 108 is a rotary electric motor comprising a stator 112 and a rotor 114 configured to rotate around a rotation axis with respect to the stator 112, at a rotational speed Sp, and to provide a torque Tq with respect to the stator 112. In the described example, the electric motor 108 is a three-phase electric motor comprising three stator phases.

For example, the inverter 110 comprises switch legs $116_{1-3}$ respectively associated to the stator phases of the electric motor 108. Each switch leg $116_{1-3}$ comprises a high side (HS) switch Q' having a first terminal connected to a positive terminal of the DC voltage source 106 and a low side (LS) switch Q having a first terminal connected to a negative terminal of the DC voltage source 106. In this manner, the DC voltage Udc is applied between the two first terminals of the HS and LS switches Q, Q'. The HS switch Q' and the LS switch Q have respective second terminals connected to each other at a middle point connected to a respective associated stator phase of the electric motor 108.

The switches Q, Q' are semiconductor switches comprising for example transistors. Each switch Q, Q' comprises for example one amongst: a Metal Oxide Semiconductor Field Effect Transistor (MOSFET), an Insulated Gate Bipolar Transistor (IGBT) and a Silicon Carbide MOSFET (SiC MOSFET).

Each switch leg $116_{1-3}$ is intended to be controlled to commute between two configurations. In the first one, called high side (HS) configuration, the HS switch Q' is closed (on) and the LS switch Q is open (off) so that the DC voltage Udc is essentially applied to the associated stator phase. In the second one, called low side (LS) configuration, the HS switch Q' is open (off) and the LS switch Q is closed (on) so that a zero voltage is essentially applied to the associated stator phase.

The switch legs $116_{1-3}$ are included in one or several power modules. Each power module therefore comprises one or several switch legs $116_{1-3}$. For example, all the switch legs $116_{1-3}$ may be included in a single power module, such as a three phase power module. In the described example, each switch leg $116_{1-3}$ is included in a respective power module, so that each power module comprise exactly one switch leg $116_{1-3}$. For this reason, in the rest of the description, the references "$116_{1-3}$" will be used interchangeably for the switch legs and the power modules.

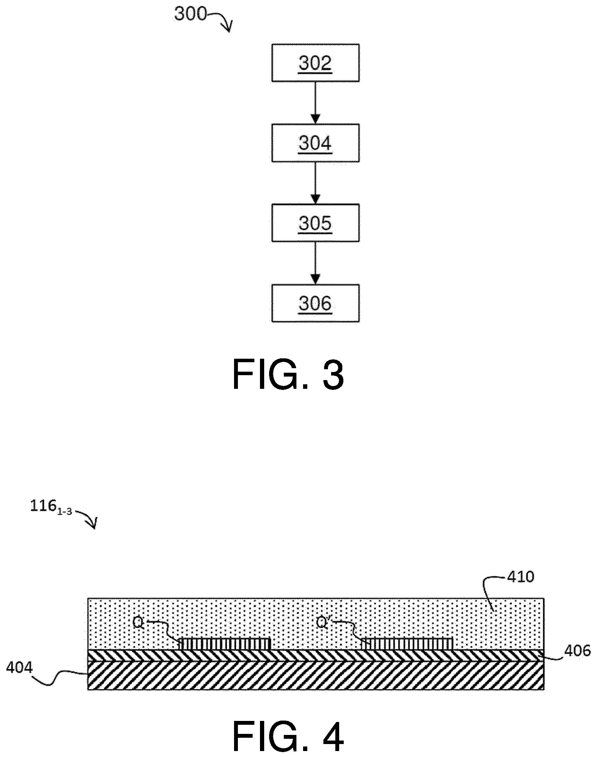

Referring to figure 4, each power module $116_{1-3}$ comprises for example a base plate 404 and a substrate 406 fixed on a top face of the base plate 404. The substrate 406 is for example a Direct Bonded Copper (DBC) substrate comprising for instance a ceramic plate with copper layers on both sides. The substrate 406 can for example also be lead frame on top of an isolation layer that is somehow connected to the base plate 404. Each semiconductor switch Q, Q' of the power module $116_{1-3}$ is mounted on the substrate 406. The power module $116_{1-3}$ further comprises an electrically insulating housing 410 surrounding the substrate 406 and the semiconductor switches Q, Q', while letting apparent at least a part of a downward face of the base plate 404. The electrically insulating housing 410 may comprise for example epoxy resin or alternatively a plastic casing filled up with an electrically insulating gel.

Back to figure 1, the inverter 110 further comprises a cooling device 118 for cooling the power modules $116_{1-3}$. The cooling device 118 defines a coolant path in which a coolant enters at a temperature $T_C$ and flows at a flow rate FR, so as to absorb a heat generated by the power modules $116_{1-3}$.

The inverter 110 further comprises a control device 120 configured to control the switches Q, Q' such that the switches Q, Q' convert the DC voltage Udc into an AC voltage, which may be a multiphase AC voltage, for example, a three phase voltage. In the described example, the voltage phases of the AC voltage are respectively provided to the stator phases of the electric motor 108. In response to the AC voltage, the electric motor 108 causes the power modules $116_{1-3}$ to output a total output AC current I to the electrical motor 108. In the described example, the total output AC current I is a multiphase AC current (for instant three phase AC current) having phase currents being respectively provided to the stator phases of the electric motor 108.

In the described example, the control device 120 is configured to commute each switch leg $116_{1-3}$ between the two configurations mentioned above, at a switching frequency $F_{SW}$. The AC voltage provided to the stator phase associated with the switch leg $116_{1-3}$ is then obtained by varying a duty cycle between the two configurations, according to a Pulse Width Modulation (PWM) scheme.

For example, the Sinusoidal PWM (SPWM) scheme may be used for each switch leg $116_{1-3}$. In the SPWM scheme, a sine wave (modulated wave) is compared with a triangle wave (carrier wave). When the instantaneous value of the triangle wave is less than that of the sine wave, the switch leg $116_{1-3}$ is switched to a first of the two configurations. Otherwise the switch leg $116_{1-3}$ is switched to the second of the two configurations. The switching is produced at every moment the sine wave intersects the triangle wave. Thus the different crossing positions change the duty cycle. To describe the modulation state, a modulation index M is defined by the ratio of the amplitude of the modulated wave to that of the carrier wave.

The control device 120 is further configured for estimating an internal temperature $T_J$ of at least one of the semiconductor switches Q, Q', by means of a temperature model 122 of the at least one semiconductor switches Q, Q'.

The estimated temperature $T_J$ is preferably a junction temperature of the at least one semiconductor switches Q, Q'. When the internal temperature of several semiconductor switches Q, Q' is estimated, the control device 120 uses preferably a respective temperature model 122 for each semiconductor switch Q, Q'.

The temperature model 122 maybe stored either in the control device 120 or outside of the control device. The temperature model 122 is a polynomial of order three or more having, as arguments, operating parameters of the power module $116_{1-3}$ and/or of the electric motor 108.

For example, the control device 120 comprises a computer system comprising a data processing unit (such as a microprocessor) and a main memory (such as a RAM memory, standing for "Random Access Memory") accessible by the processing unit.

The computer system further comprises for example a network interface and/or a computer readable medium, such as for example a local medium (such as a local hard disk). A computer program containing instructions for the processing unit is stored on the medium and/or downloadable via the network interface. This computer program is for example intended to be loaded into the main memory, so that the processing unit executes its instructions so as to carry out the temperature estimation method of figure 3 using the temperature model 122. Alternatively, all or part of the steps of the method could be implemented in hardware modules, that is to say in the form of an electronic circuit, for example micro-wired, not involving a computer program.

For obtaining the operating parameters to be fed to the temperature model 122, the electric drive 104 further comprises a measure system 124 including sensors 124A-J of at least some of the operating parameters and/or estimators of at least some of the operating parameters from measures made by sensors.

The temperature model 122 is preferably trained in advance by machine learning to provide the estimated temperature $T_J$ from the measured or estimated operating parameters. In particular, the training comprises determining coefficients of each term (also called monomial) of the polynomial.

It has been found that the polynomial could be limited to degree 3, while still achieving good results. A polynomial of degree 3 comprises at least one term with one of the operating parameters cubed, and no term with a higher powered operating parameter.

The operating parameters include preferably at least one amongst: the switching frequency $F_{SW}$ of the inverter 110, the rotational speed Sp of the electric motor 108, a temperature $T_S$ of the power modules $116_{1-3}$, an current outputted by the power modules $116_{1-3}$, the flow rate FR of the coolant, the temperature $T_C$ of the coolant, the DC voltage Udc of the inverter 110, the torque Tq of the rotor 114, the power factor PF of the electric motor 108, and the modulation index M of the inverter 110.

For example, the temperature Ts of the power module $116_{1-3}$ may be an ambient temperature of the switches Q, Q' or a temperature of the substrate 406.

Also for example, the output current outputted by the power modules $116_{1-3}$ may be the total output AC current I (as in the described example) or one or several phase current. The output current outputted by the power modules $116_{1-3}$ is for example expressed as Root-Mean-Square ("RMS").

In the described example, the measure system 124 then comprises a temperature sensor 124C for measuring the temperature $T_S$ of the power modules $116_{1-3}$, an AC current sensor 124 for measuring the total output AC current I, and a DC voltage sensor 124G for measuring the DC voltage Udc.

It has been found that, in general, the most important operating parameters are: the switching frequency $F_{SW}$, the output current, the coolant entry temperature $T_C$, the coolant flow rate FR, the DC voltage Udc and the rotational speed Sp of the electric motor 108. The remaining operating parameters mentioned above have in general a small impact on the temperature estimation, but may be used for extra precision.

Referring to figure 2, an example of a machine learning method 200 for training the temperature model first comprises, at a step 202, obtaining training data by measuring the temperature $T_J$ on a test electric drive, for several combinations of the operating parameters. For example, an infrared camera is used for the measurements. The inventors have found that the number of combinations of the operating parameters should be at least ten times higher than the number of operating parameters.

At a step 204, the temperature model 122 is trained using the training data. The training comprises for example a polynomial regression. In this case, a coefficient is obtained for each term of the polynomial. Preferably, the initial temperature model 122 (before training) comprises terms for all the operating parameters and for all power (for example until the third power, for a degree 3 polynomial). The terms with very low (near zero) coefficients may be removed.

The terms of the initial temperature model are for example randomly initialized.

The machine learning method 200 has been applied by the invertors to a specific electric drive, using 389 combinations of the 10 operating parameters listed above. In these 389 combinations: the rotational Sp takes 12 different values, the torque takes 49 different values, the DC voltage Udc takes 13 different values, the flowrate FR takes 5 different values, the coolant temperature takes 21 different values, and the switching frequency $F_{SW}$ takes 30 different values.

The result was the following temperature model:

$T_J = \theta1 + \theta2 \cdot Tq + \theta3 \cdot Tq^2 + \theta4 \cdot T_s + \theta5 \cdot T_s^2 + \theta6 \cdot T_s^3 + \theta7 \cdot I + \theta8 \cdot I^2 + \theta9 \cdot I^3 + \theta10 \cdot Udc + \theta11 \cdot Udc^2 + \theta12 \cdot M + \theta13 \cdot PF + \theta14 \cdot Sp + \theta15 \cdot Sp^2 + \theta16 \cdot S\rho^3 + \theta17 \cdot T_c + \theta18 \cdot T_c^3 + \theta19 \cdot FR + \theta20 \cdot FR^2 + \theta21 \cdot FR^3 + \theta22 \cdot F_{SW} + \theta23 \cdot F_{SW}^2 + \theta24 \cdot F_{SW}^3$
where $\theta k$ (k = 1... 24) are fixed coefficients. The modulus (i.e. absolute value) of the coefficients represents the weight of the associated operating parameter in the estimation, and is indicated in the following table:

| Parameter | k | Value | Modulus |
|---|---|---|---|
| $F_{SW}^2$ | 23 | -218,6774434 | 218,6774434 |
| $F_{SW}^3$ | 24 | 115,2774641 | 115,2774641 |
| - | 1 | 112,9796506 | 112,9796506 |
| Fsw | 22 | 107,0163789 | 107,0163789 |
| $Sp^2$ | 15 | 51,28720555 | 51,28720555 |
| $Sp^3$ | 16 | -37,82053199 | 37,82053199 |
| Ts | 4 | 37,5362634 | 37,5362634 |
| $I^2$ | 8 | 34,10395401 | 34,10395401 |
| $F_{SW}^2$ | 20 | 27,5706309 | 27,5706309 |
| $I^3$ | 9 | -16,65066634 | 16,65066634 |
| $FR^3$ | 21 | -16,23478505 | 16,23478505 |
| Sp | 14 | -13,73752644 | 13,73752644 |
| Tc | 17 | -12,70610547 | 12,70610547 |
| I | 7 | -11,01411925 | 11,01411925 |
| $T_s^3$ | 6 | 7,372680534 | 7,372680534 |
| FR | 19 | -6,166685681 | 6,166685681 |
| Udc | 10 | 4,950216873 | 4,950216873 |
| $T_s^2$ | 5 | -3,962139526 | 3,962139526 |
| $Udc^2$ | 11 | -3,243039309 | 3,243039309 |
| $Tq^2$ | 3 | -1,460022719 | 1,460022719 |
| $T_c^3$ | 18 | -1,320021192 | 1,320021192 |
| PF | 13 | 1,28377881 | 1,28377881 |
| Tq | 2 | -0,930897292 | 0,930897292 |
| M | 12 | 0,13371122 | 0,13371122 |

The operating parameters of the previous temperature model are expressed in a scaled version X' according to the following formula:

$$X' = (X - \mu i)/sigma2$$

where X is the operating parameter in its measured/estimated version, and $\mu i$ and sigma2 are constants associated with this operating parameter so that all operating parameters are in the same scale. $\mu i$ and sigma2 are for instance determined during training, so that $\mu i$ is the mean of the operating parameter values in the training data, and sigma 2 is the standard deviation of the operating parameter values in the training data. In the described example, $\mu i$ and sigma2 are:

| k | Sigma2 | $\mu i$ |
|---|---|---|
| 1 | 69,64795 | 84,61025 |
| 2 | 6534,25 | 11997,26 |

(continued)

| k | Sigma2 | µi |
|---|---|---|
| 3 | 27,23209 | 83,47947 |
| 4 | 3678,076 | 7708,503 |
| 5 | 441478 | 740474,4 |
| 6 | 89,85096 | 309,7027 |
| 7 | 50048,4 | 103968,2 |
| 8 | 22845802 | 36631134 |
| 9 | 61,14767 | 401,76 |
| 10 | 48536,29 | 165140,5 |
| 11 | 0,235659 | 0,146389 |
| 12 | 0,210372 | 0,852619 |
| 13 | 2912,501 | 1083,463 |
| 14 | 42323970 | 9634746 |
| 15 | 6,25E+11 | 1,3E+11 |
| 16 | 32,75474 | 40,69416 |
| 17 | 100558,4 | 147487,9 |
| 18 | 2,569787 | 6,75964 |
| 19 | 26,56635 | 52,27956 |
| 20 | 246,473 | 420,4849 |
| 21 | 1606,023 | 7505,468 |
| 22 | 22964705 | 58904729 |
| 23 | 2,53E+11 | 4,79E+11 |

Referring to figure 3, an example of a method 300 for estimating the temperature $T_J$ first comprises, at a step 302, measuring or estimating the operating parameters of at least one of the power modules $116_{1-3}$ and/or the electric motor 108. In the described example, the 10 previously listed operating parameters are measured and/or estimated.

At a step 304, the control device 120 receives the measured or estimated operating parameters.

At a step 305, the received operating parameters are scaled according to the constants µi and sigma2.

At a step 306, the control device 120 applies the scaled operating parameters to the temperature model 122 to provide an estimation of the temperature $T_J$.

The temperature model 122 detailed above has been evaluated by using a quantified value for the difference between measurements and forecast (error). In particular, the mean absolute error (MAE) has been used, defined by:

$$MAE = (1/m) * \Sigma \mid Measurement - Forecast \mid$$

The MAE has been found to be 1.8 °C, with the maximum absolute difference being 8°C, which shows the accuracy of the temperature model 122.

It will be noted that the invention is not limited to the embodiments described above. It will indeed appear to those skilled in the art that various modifications can be made to the embodiments described above, in the light of the teaching which has just been disclosed.

In the previous detailed description of the invention, the terms used should not be interpreted as limiting the invention to the embodiments presented in the present description, but should be interpreted to include all the equivalents within the reach of those skilled in the art by applying their general knowledge to the implementation of the teaching which has just been disclosed.

**Claims**

1.  Inverter (110) comprising:

    - a power module ($116_{1-3}$) having at least one semiconductor switch (Q, Q'), and
    - a control device (120) configured to control the power module ($116_{1-3}$) such that, during normal operation of the inverter (110), the power module ($116_{1-3}$) converts a DC voltage (Udc) into an AC voltage (Vac) by a switching operation of the at least one semiconductor switch (Q, Q'), the control device (120) being further configured to estimate an internal temperature ($T_J$) of the at least one semiconductor switch (Q, Q') by means of a temperature model (122) of the at least one semiconductor switch (Q, Q'), the temperature model (122) being for example stored in the control device (120),

    wherein the temperature model (122) is a polynomial of order three or more having, as arguments, operating parameters including:

    - a switching frequency ($F_{SW}$) of the inverter (110) associated with the switching operation,
    - a temperature (Ts) of the power module ($116_{1-3}$), for example an ambient temperature of the at least one semiconductor switch (Q, Q') or a temperature of a substrate (406), such as a direct copper bonding substrate, on which the at least one semiconductor switch (Q, Q') is mounted,
    - an AC current (I) outputted by the power module ($116_{1-3}$) in response to the AC voltage (Vac), and
    - the DC voltage (Udc).

2.  Inverter (110) according to claim 1, wherein the operating parameters include at least one of, preferably all of:

    - a rotational speed (Sp) of an electric motor (108) intended to be driven by the inverter (110) or a fundamental frequency of the AC voltage (Vac),
    - a flow rate (FR) of a coolant in a cooling device (118) of the inverter (110) for cooling the power module ($116_{1-3}$), in particular the at least one semiconductor switch (Q, Q'), and
    - a coolant temperature (Tc) of the coolant.

3.  Inverter (110) according to claim 2, wherein the operating parameters include at least one of:

    - a rotor torque (Tq) of the electric motor (108),
    - a power factor (PF) associated with the electric motor (108), and
    - a modulation index (M) of the inverter (110) associated with the switching operation.

4.  Invertor (110) according to any of claims 1 to 3, wherein the estimated internal temperature ($T_J$) is a junction temperature of the at least one semiconductor switch (Q, Q').

5.  Invertor (110) according to claim 4, wherein the power module ($116_{1-3}$) comprises at least one switch leg comprising two semiconductor switches (Q, Q') each having first and second terminals, the two second terminals being connected to each other at a middle point and the DC voltage (Udc) being intended to be applied between the two first terminals.

6.  Invertor (110) according to any of claims 1 to 5, wherein the at least one semiconductor switch is an IGBT or a MOSFET, and/or wherein the AC voltage (Vac) is a multiphase voltage, such as a three phase voltage.

7.  Invertor (110) according to any of claims 1 to 6, further comprising at least one sensor (124A-J) for respectively measuring at least one of the operating parameters, for example a temperature sensor (124C) for measuring the temperature (Ts) of the power module ($116_{1-3}$), an AC current sensor (124D) for measuring the AC current (I) outputted by the power module ($116_{1-3}$), or a DC voltage sensor (124G) for measuring the DC voltage (Udc).

8.  Invertor (110) according to any of claims 1 to 7, wherein the temperature model (122) is trained in advance by machine learning, wherein particularly the training comprises:

    - obtaining (202) training data by measuring, for example using an infrared camera, the internal temperature of a test inverter, for several combinations of the operating parameters, and
    - training (204) the polynomial of the temperature model (122) using the training data, for example using a polynomial regression.

9.  Invertor (110) according to claim 8, wherein there are at least ten times more combinations than operating parameters.

10. Electric drive (104) comprising an inverter (110) according to any of claims 1 to 9, and an electric motor (108) driven by the inverter (110).

11. Vehicle (100) comprising drive wheels (102) and an electric drive (104) according to claim 10 for driving, at least indirectly, at least one of the wheels (102).

12. Method (300) for estimating an internal temperature $(T_J)$ of at least one semiconductor switch (Q, Q') of a power module $(116_{1-3})$ of an inverter (110) in particular according to any of claims 1 to 9 comprising, in addition to the power module, a control device (120) configured to control the power module $(116_{1-3})$ such that, during normal operation of the inverter (110), the power module $(116_{1-3})$ converts a DC voltage (Udc) into an AC voltage (Vac) by a switching operation of the at least one semiconductor switch (Q, Q'), the method (300) comprising:

- receiving (304) measured or estimated operating parameters, and
- estimating the internal temperature $(T_J)$ by means of a temperature model (122) of the at least one semiconductor switch (Q, Q'), wherein the temperature module is a polynomial of order three or more having, as arguments, the received operating parameters, wherein the operating parameters include:

  + a switching frequency (Fsw) of the inverter (110) associated with the switching operation,
  + a temperature (Ts) of the power module $(116_{1-3})$, for example an ambient temperature of the at least one semiconductor switch (Q, Q') or a temperature of a substrate (406), such as a direct copper bonding substrate, on which the at least one semiconductor switch (Q, Q') is mounted,
  + an AC current (I) outputted by the power module $(116_{1-3})$ in response to the AC voltage (Vac), and
  + the DC voltage (Udc).

FIG. 1

FIG. 2

300

302

304

305

306

# FIG. 3

$116_{1-3}$

410

406

404

# FIG. 4

**EP 4 117 156 A1**

Europäisches Patentamt
European Patent Office
Office européen des brevets

# EUROPEAN SEARCH REPORT

Application Number

EP 22 18 3412

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | NAGESH J ET AL: "Junction Temperature Calculation of an IGBT Module in Simulation Platform", 2018 IEEE INTERNATIONAL CONFERENCE ON POWER ELECTRONICS, DRIVES AND ENERGY SYSTEMS (PEDES), IEEE, 18 December 2018 (2018-12-18), pages 1-5, XP033546026, DOI: 10.1109/PEDES.2018.8707653 [retrieved on 2019-05-06] * Sections II and III * | 1-12 | INV. H02M1/32 H02M7/5387 |
| X | MIAO JIGUI ET AL: "IGBT Junction Temperature Estimation Based on Machine Learning Method", 2020 IEEE 9TH INTERNATIONAL POWER ELECTRONICS AND MOTION CONTROL CONFERENCE (IPEMC2020-ECCE ASIA), IEEE, 29 November 2020 (2020-11-29), pages 1-5, XP033893568, DOI: 10.1109/IPEMC-ECCEASIA48364.2020.9395640 [retrieved on 2021-04-05] * Section II * | 1-12 | |
| X | EP 2 498 391 B1 (TOSHIBA KK [JP]) 15 April 2020 (2020-04-15) * abstract; figure 3 * | 1-12 | TECHNICAL FIELDS SEARCHED (IPC) H02M |

The present search report has been drawn up for all claims

| Place of search | Date of completion of the search | Examiner |
|---|---|---|
| The Hague | 31 October 2022 | Madouroglou, E |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 22 18 3412

This annex lists the patent family members relating to the patent documents cited in the above-mentioned European search report.
The members are as contained in the European Patent Office EDP file on
The European Patent Office is in no way liable for these particulars which are merely given for the purpose of information.

31-10-2022

| Patent document cited in search report | | Publication date | Patent family member(s) | | Publication date |
|---|---|---|---|---|---|
| EP 2498391 | B1 | 15-04-2020 | CN | 102474198 A | 23-05-2012 |
| | | | EP | 2498391 A1 | 12-09-2012 |
| | | | JP | 5443946 B2 | 19-03-2014 |
| | | | JP | 2011097812 A | 12-05-2011 |
| | | | US | 2012217795 A1 | 30-08-2012 |
| | | | WO | 2011052623 A1 | 05-05-2011 |

EPO FORM P0459

For more details about this annex : see Official Journal of the European Patent Office, No. 12/82